(19) Europäisches Patentamt
European Patent Office
Office européen des brevets

(11) EP 4 621 881 A1

(12) EUROPEAN PATENT APPLICATION
published in accordance with Art. 153(4) EPC

(43) Date of publication:
24.09.2025 Bulletin 2025/39

(51) International Patent Classification (IPC):
H01M 4/525 (2010.01)        H01M 4/505 (2010.01)
H01M 4/36 (2006.01)         H01M 4/131 (2010.01)
H01M 10/052 (2010.01)       H01M 4/02 (2006.01)

(21) Application number: 23907859.5

(22) Date of filing: 22.12.2023

(52) Cooperative Patent Classification (CPC):
H01M 4/02; H01M 4/131; H01M 4/36; H01M 4/505;
H01M 4/525; H01M 10/052; Y02E 60/10

(86) International application number:
PCT/KR2023/021398

(87) International publication number:
WO 2024/136576 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.12.2022 KR 20220183745

(71) Applicant: LG Energy Solution, Ltd.
Seoul 07335 (KR)

(72) Inventors:
• LHO, Eun Sol
  Daejeon 34122 (KR)
• HWANG, Jin Tae
  Daejeon 34122 (KR)
• OH, Su Yeon
  Daejeon 34122 (KR)
• PARK, Byung Chun
  Daejeon 34122 (KR)
• PARK, Sang Min
  Daejeon 34122 (KR)
• LEE, Sang Wook
  Daejeon 34122 (KR)
• KIM, Seul Ki
  Daejeon 34122 (KR)
• KIM, Hyeong Il
  Daejeon 34122 (KR)

(74) Representative: Hoffmann Eitle
Patent- und Rechtsanwälte PartmbB
Arabellastraße 30
81925 München (DE)

(54) CATHODE ACTIVE MATERIAL, AND CATHODE AND LITHIUM SECONDARY BATTERY COMPRISING SAME

(57)    The present invention relates to a positive electrode active material including: a lithium nickel-based transition metal oxide with a large particle diameter and a lithium nickel-based transition metal oxide with a small particle diameter, wherein the lithium nickel-based transition metal oxide is in the form of at least one of a single particle formed of one nodule and a quasi-single particle that is a composite of 30 or less nodules, wherein the lithium nickel-based transition metal oxide with a large particle diameter has a $D^L_{50}$ of 6.5 µm to 12.0 µm, and the lithium nickel-based transition metal oxide with a small particle diameter has a $D^S_{50}$ of 1.1 µm to 4.0 µm, and wherein the lithium nickel-based transition metal oxide with a large particle diameter satisfies Equation 1 below. The positive electrode active material is applied to a positive electrode to provide a lithium secondary battery in which the breakage of the positive electrode active material particles is suppressed, and the generation of fine powder is reduced to improve lifespan characteristics and reduce gas generation.

[Equation 1]

$$1.0 \leq D^L_{50} / D^L_{mean} \leq 2.0$$

wherein the $D^L_{mean}$ is the average particle diameter value of the nodule measured from a scanning electron microscope image for the lithium nickel-based transition metal oxide with a large particle diameter, and the $D^L_{50}$ is the 50% volume cumulative distribution value of the lithium nickel-based transition metal oxide with a large particle

diameter.

**Description**

**[Technical Field]**

CROSS-REFERENCE TO RELATED APPLICATIONS

This application claims the benefit of priority to Korean Patent Application No. 10-2022-0183745 filed on December 23, 2022, the disclosure of which is incorporated herein by reference in its entirety.

Technical Field

The present invention relates to a positive electrode active material for a lithium secondary battery, and a positive electrode and a lithium secondary battery including the same, and more specifically, to a positive electrode active material comprising a lithium nickel-based transition metal oxide in the form of a single particle and/or a quasi-single particle, and a positive electrode and a lithium secondary battery including the same.

**[Background Art]**

A lithium secondary battery is generally composed of a positive electrode, a negative electrode, a separator, and an electrolyte, wherein the positive electrode and the negative electrode include an active material capable of intercalating and deintercalating lithium ions.

As a positive electrode active material for the lithium secondary battery, a lithium cobalt oxide ($LiCoO_2$), a lithium nickel oxide ($LiNiO_2$), a lithium manganese oxide ($LiMnO_2$, $LiMnO_4$, or the like), a lithium iron phosphate compound ($LiFePO_4$), etc. have been used. Among them, the lithium cobalt oxide has the advantages of high operating voltage and excellent capacity characteristics, but the price of cobalt, which is a raw material, is high and its supply is unstable, making it difficult to commercially apply it to a large-capacity battery. The lithium nickel oxide has poor structural stability, making it difficult to achieve sufficient lifespan characteristics. Meanwhile, the lithium manganese oxide has excellent stability, but has a problem of poor capacity characteristics. Therefore, in order to compensate for the problems of the lithium transition metal oxides containing Ni, Co, or Mn alone, lithium nickel-based transition metal oxides containing two or more transition metals have been developed, and in particular, a lithium nickel cobalt manganese oxide containing Ni, Co, and Mn are widely used in the field of electric vehicle batteries.

Conventional lithium nickel cobalt manganese oxide was generally in the form of a spherical secondary particle in which tens to hundreds of primary particles are aggregated. However, in the case of the lithium nickel cobalt manganese oxide in the form of a secondary particle in which a large number of primary particles are aggregated, there is a problem in that particle breakage, in which primary particles fall off, is likely to occur during the rolling process when manufacturing a positive electrode, and cracks occur inside the particles during the charging and discharging process. When the particles of the positive electrode active material are broken or cracked, the contact area with an electrolyte increases, which increases generation of gas and deterioration of the active material due to side reactions with the electrolyte, thereby degrading lifespan characteristics.

In addition, recently, there has been an increasing demand for high-power and high-capacity batteries, such as batteries for electric vehicles, and accordingly, the nickel content in the positive electrode active material is gradually increasing. When the nickel content in the positive electrode active material increases, the initial capacity characteristics are improved, but when charging and discharging are repeated, a large amount of highly reactive $Ni^{+4}$ ions are generated to cause structural collapse of the positive electrode active material. As a result, the positive electrode active material deteriorates at an increased rate, thereby degrading life characteristics and battery safety.

**[Disclosure]**

**[Technical Problem]**

The present invention is intended to solve the above problems and provide a positive electrode active material that can suppress particle breakage and cracks during the electrode manufacturing and charging/discharging process, and has excellent tap density and rolling density due to the low amount of fine powder generated.

In addition, the present invention is to provide a positive electrode and a lithium secondary battery with improved high-temperature lifespan characteristics and high-temperature storage characteristics by including the above positive electrode active material.

**[Technical Solution]**

In order to solve the above problems, according to one aspect of the present invention, there is provided a positive electrode active material, including: a lithium nickel-based transition metal oxide with a large particle diameter and a lithium nickel-based transition metal oxide with a small particle diameter, wherein the lithium nickel-based transition metal oxide is in the form of at least one of a single particle formed of one nodule and a quasi-single particle that is a composite of 30 or less nodules, wherein the lithium nickel-based transition metal oxide with a large particle diameter has a $D^L_{50}$ of 6.5 $\mu$m to 12.0 $\mu$m, and the lithium nickel-based transition metal oxide with a small particle diameter has a $D^S_{50}$ of 1.1 $\mu$m to 4.0 $\mu$m, and wherein the lithium nickel-based transition metal oxide with a large particle diameter satisfies Equation 1 below:

$$[\text{Equation 1}]$$

$$1.0 \leq D^L_{50} / D^L_{mean} \leq 2.0$$

wherein the $D^L_{mean}$ is the average particle diameter value of the nodule measured from a scanning electron microscope image for the lithium nickel-based transition metal oxide with a large particle diameter, and the $D^L_{50}$ is the 50% volume cumulative distribution value of the lithium nickel-based transition metal oxide with a large particle diameter.

In order to solve the above problems, according to another aspect of the present invention, there is provided a positive electrode including the positive electrode active material according to the present invention.

In order to solve the above problems, according to still another aspect of the present invention, there is provided a lithium secondary battery including the positive electrode according to the present invention.

**[Advantageous Effects]**

The positive electrode active material for a lithium secondary battery according to the present invention includes a lithium nickel-based transition metal oxide in the form of a single particle and/or a quasi-single particle with excellent particle strength, thereby reducing the occurrence of particle breakage or cracks caused by rolling when manufacturing the electrode, reducing the amount of fine powder generated, and having bimodal particle size characteristics that satisfy a specific condition, enabling excellent levels of tap density and rolling density to be achieved.

In addition, in the positive electrode active material for a lithium secondary battery according to the present invention, particle breakage is minimized, thereby reducing side reactions with the electrolyte and thus the amount of gas generation. Further, changes in the crystal structure are minimized during the charging and discharging process, thereby suppressing the deterioration of the positive electrode active material, and thus improving high-temperature lifespan characteristics and high-temperature storage characteristics.

**[Best Modes of the Invention]**

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

It should be understood that terms such as "comprise", "include", and "have" as used herein are intended to designate the presence of implemented features, numbers, steps, components, or combinations thereof, but not to preclude a possibility of existence or addition of one or more other features, numbers, steps, components, or combinations thereof.

In the present disclosure, a "single particle" is a particle formed of a single nodule. In the present disclosure, the "nodule" refers to a particle unit that may be a single crystal lacking a crystalline grain boundary, or a polycrystal with no apparent grain boundary when observed at a field of view of 5,000 to 20,000 times using a scanning electron microscope (SEM). In the present disclosure, a "quasi-single particle" refers to a particle that is a composite formed of 30 or less nodules.

In the present disclosure, a "secondary particle" refers to a particle formed by agglomerating tens to hundreds of primary particles. More specifically, the secondary particle is an agglomerate of 50 primary particles or more.

The term "particle" used in the present disclosure may include any one or all of a single particle, a quasi-single particle, a primary particle, a nodule, and a secondary particle.

In the present disclosure, a "$D_{mean}$" refers to an average value of the particle diameter of each nodule obtained for about 30 particles containing one or more nodules by photographing the positive electrode active material particles with a scanning electron microscope (SEM).

In the present disclosure, a "$D_{50}$" refers to a particle size based on 50% of a volume cumulative particle size distribution of a positive electrode active material powder. The average particle diameter $D_{50}$ can be measured using a laser diffraction method. For example, the positive electrode active material powder is dispersed in a dispersion medium, and then introduced into a commercially available laser diffraction particle size measurement device (e.g., Microtrac MT 3000) and irradiated with an ultrasonic wave of about 28 kHz with an output of 60 W. Thereafter, the average particle diameter can be determined by obtaining a volume cumulative particle size distribution graph, and then obtaining a particle size corresponding to 50% of the volume cumulative amount.

Hereinafter, the present invention will be described in more detail.

## Positive Electrode Active Material

A positive electrode active material according to the present invention include a lithium nickel-based transition metal oxide with a large particle diameter and a lithium nickel-based transition metal oxide with a small particle diameter, wherein the lithium nickel-based transition metal oxide is in the form of at least one of a single particle formed of one nodule and a quasi-single particle that is a composite of 30 or less nodules, wherein the lithium nickel-based transition metal oxide with a large particle diameter has a $D^L_{50}$ of 6.5 $\mu$m to 12.0 $\mu$m, and the lithium nickel-based transition metal oxide with a small particle diameter has a $D^S_{50}$ of 1.1 $\mu$m to 4.0 $\mu$m.

The lithium nickel-based transition metal oxide in the form of a single particle and/or a quasi-single particle has higher particle strength compared to conventional lithium nickel-based transition metal oxides in the form of a secondary particle in which tens to hundreds of primary particles are aggregated, and thus, there is less particle breakage during rolling.

In addition, the lithium nickel-based transition metal oxide in the form of a single particle or quasi-single particle according to the present invention has a small number of sub-components(i.e., nodules) constituting the particle, whereby there is little change in primary particles due to the volume expansion and contraction thereof during charging and discharging, and thus, the occurrence of cracks inside the particles is also significantly reduced.

According to one embodiment of the present invention, the positive electrode active material includes a lithium nickel-based transition metal oxide having a large particle diameter with a $D^L_{50}$ of 6.5 $\mu$m to 12.0 $\mu$m, and a lithium nickel-based transition metal oxide having a small particle diameter with a $D^S_{50}$ of 1.1 $\mu$m to 4.0 $\mu$m.

The lithium nickel-based transition metal oxide with a large particle diameter may have an average particle diameter of 50% of a cumulative volume of particles of 6.5 $\mu$m to 12.0 $\mu$m, preferably 6.8 $\mu$m or more, 7.0 $\mu$m or more, 7.2 $\mu$m or more, 7.4 $\mu$m or more, or 7.5 $\mu$m or more, and 12.0 $\mu$m or less, 11.5 $\mu$m or less, 11.0 $\mu$m or less, 10.5 $\mu$m or less, 10.0 $\mu$m or less, 9.5 $\mu$m or less, 9.0 $\mu$m or less, 8.8 $\mu$m or less. If the $D^L_{50}$ of the lithium nickel-based transition metal oxide with a large particle diameter is smaller than 6.5 $\mu$m, not only may the tap density and rolling density decrease, but also the viscosity of the slurry may increase, causing processability problems. If it is greater than 12.0 $\mu$m, it begins to take on the shape of secondary particles that are difficult to be considered as a quasi-single particle form, which may increase the amount of fine powder generated and result in poor high-temperature storage and lifespan characteristics.

The lithium nickel-based transition metal oxide with a small particle diameter may have an average particle diameter of 50% of a cumulative volume of particles of 1.1 $\mu$m to 4.0 $\mu$m, preferably 1.3 $\mu$m or more, 1.5 $\mu$m or more, 2.0 $\mu$m or more, 2.3 $\mu$m or more, or 2.5 $\mu$m or more, and 4.0 $\mu$m or less, 3.8 $\mu$m or less, 3.5 $\mu$m or less, or 3.3 $\mu$m or less. If the $D^S_{50}$ of the lithium nickel-based transition metal oxide with a small particle diameter is smaller than 1.1 $\mu$m, side reactions with the electrolyte may occur in the form of fine particles, thereby reducing high temperature lifespan and storage characteristics. If it is larger than 4.0 $\mu$m, structural stability may be relatively reduced, and tap density and rolling density may become poor.

Additionally, according to an embodiment of the present invention, the positive electrode active material may have a difference ($D^L_{50}$-$D^S_{50}$) between the large particle diameter and the small particle diameter the lithium nickel-based transition metal oxides of 2.0 $\mu$m to 5.8 $\mu$m. Specifically, the particle diameter difference may preferably be 2.2 $\mu$m or more, 2.5 $\mu$m or more, 2.7 $\mu$m or more, or 3.0 $\mu$m or more, and 5.8 $\mu$m or less, 5.6 $\mu$m or less, 5.5 $\mu$m or less, 5.3 $\mu$m or less, or 5.0 $\mu$m or less. When the particle diameter difference satisfies the above ranges, the desired effect can be efficiently realized with bimodal characteristics, and thus, excellent tap density and rolling density can be expected, thereby improving life characteristics.

According to one embodiment of the present invention, the present invention is characterized in that the following equation 1 is satisfied in relation to the volume cumulative 50% average particle diameter of the lithium nickel-based transition metal oxide with a large particle diameter:

[Equation 1]

$$1.0 \leq D^L{}_{50} / D^L{}_{mean} \leq 2.0$$

wherein the $D^L{}_{mean}$ is the average particle diameter value of the nodule measured from a scanning electron microscope image for the lithium nickel-based transition metal oxide with a large particle diameter, and the $D^L{}_{50}$ is the 50% volume cumulative distribution value of the lithium nickel-based transition metal oxide with a large particle diameter.

The nodule of the lithium nickel-based transition metal oxide with a large particle diameter may have an average particle diameter ($D^L{}_{mean}$) of 3.0 $\mu$m to 10.0 $\mu$m, and the nodule may preferably have an average particle diameter of 3.2 $\mu$m or more, 3.5 $\mu$m or more, or 4.0 $\mu$m or more, and 9.0 $\mu$m or less, 8.5 $\mu$m or less, or 8.0 $\mu$m or less.

In addition, the nodule of the lithium nickel-based transition metal oxide with a small particle diameter may have an average particle diameter ($D^S{}_{mean}$) of 1.0 $\mu$m to 3.0 $\mu$m, preferably 1.5 $\mu$m or more, 1.8 $\mu$m or more, or 2.0 $\mu$m or more, and 2.8 $\mu$m or less, or 2.5 $\mu$m or less, and may satisfy the following equation 2 in relation to the volume cumulative 50% average particle diameter of the lithium nickel-based transition metal oxide with a small particle diameter:

[Equation 2]

$$1.0 \leq D^S{}_{50} / D^S{}_{mean} \leq 2.0$$

wherein the $D^S{}_{mean}$ is the average particle diameter value of the nodule measured from a scanning electron microscope image for the lithium nickel-based transition metal oxide with a small particle diameter, and the $D^S{}_{50}$ is the 50% volume cumulative distribution value of the lithium nickel-based transition metal oxide with a small particle diameter.

The nodule is a basic unit constituting a single particle or quasi-single particle. The smaller the ratio of the average particle diameter of the nodule to the volume average particle diameter ($D^L{}_{50}$ or $D^S{}_{50}$) of the lithium nickel-based transition metal oxide, the particles are in the form of a single particle, or a quasi-single particle formed of a smaller number of nodules. In other words, it can be confirmed whether the overall particles are in the form of a quasi-single particle or a single particle. If the above range is satisfied, the degree of particle breakage can be reduced and the rolling density can be improved, so that both lifespan characteristics and energy density can be expected to be improved.

According to one embodiment of the present invention, the positive electrode active material satisfies the bimodal particle size characteristics as described above, and thus, may have a tap density of 2.40 g/cm$^3$ or more and a rolling density of 3.60 g/cm$^3$ or more. Furthermore, if the ratio of the average particle diameter of the nodule to the $D_{50}$ of each of the large particle diameter and small particle diameter particles is applied at an appropriate level and the mixing ratio of the two particles is also appropriately adopted, it can be expected to have excellent density characteristics while also improving high temperature storage and lifespan characteristics.

According to one embodiment of the present invention, the mixing weight ratio of the lithium nickel-based transition metal oxide with a large particle diameter and the lithium nickel-based transition metal oxide with a small particle diameter may be 2:8 to 8:2, preferably 3:7 to 7:3. If the lithium nickel-based transition metal oxide with a large particle diameter is contained in an amount exceeding 80% by weight, the rolling density may decrease and the resistance may become poor. If the lithium nickel-based transition metal oxide with a small particle diameter is contained in excess of 80% by weight, lifespan characteristics may be poor due to gas generation resulting from particle breakage.

According to one embodiment of the present invention, the positive electrode active material may have bimodal particle size characteristics as described above and thus, have excellent tap density and rolling density. After rolling, fine particles with a particle diameter of 1 $\mu$m or less in the positive electrode may exist in an amount of 2.0% by volume or less based on the total volume of the positive electrode active material particles, and in this case, side reactions with the electrolyte can be significantly reduced. The fine particle content may preferably be 1.9 vol% or less, 1.8 vol% or less, 1.7 vol% or less, 1.6 vol% or less, or 1.5 vol% or less.

Meanwhile, the positive electrode active material according to the present invention may include large-diameter and small-diameter lithium nickel-based transition metal oxides, and each of them may independently include a lithium nickel-based transition metal oxide having a composition shown in Chemical Formula 1 below:

[Chemical Formula 1]    $Li_{1+x}Ni_aCo_bM^1{}_cM^2{}_dO_{2-e}X_e$

wherein $M^1$ includes one or more selected from Mn and Al; $M^2$ includes one or more selected from the group consisting of W, Zr, Y, Ba, Ca, Ti, V, Mg, Ta and Nb; X includes one or more selected from the group consisting of N, P, S, F and Cl; and $0 \leq x \leq 0.1$, $0.6 \leq a < 1$, $0 < b \leq 0.3$, $0 < c \leq 0.3$, $0 \leq d \leq 0.05$ and $0 \leq e \leq 0.05$.

In Formula 1 above, $M^1$ is Mn, Al or a combination thereof, preferably Mn, or a combination of Mn and Al; and $M^2$

may be at least one selected from the group consisting of Zr, W, Y, Ba, Ca, Ti, Mg, Ta, and Nb, and preferably at least one selected from the group consisting of Zr, Y, Mg, and Ti, and more preferably Zr, Y, or a combination thereof. The $M^2$ element is not necessarily included, but when included in an appropriate amount, it can play a role in promoting grain growth during calcination or improving crystal structure stability. In addition, X is an anion substituted for the oxygen site and may include N, P, S, F, or Cl.

The 1+x represents a molar ratio of lithium to the total number of moles of transition metal in the lithium nickel-based transition metal oxide (Li/Me), and may be $0 \leq x \leq 0.1$, $0 \leq x < 0.1$, $0 \leq x \leq 0.09$, $0 \leq x \leq 0.07$, $0 \leq x \leq 0.05$, $0 \leq x \leq 0.03$, or $0 \leq x \leq 0.02$.

The a represents a molar ratio of nickel among all metals except lithium in the lithium nickel-based transition metal oxide, and may be $0.60 \leq a < 1.00$, $0.65 < a \leq 0.99$, $0.70 \leq a \leq 0.99$, $0.75 \leq a \leq 0.99$, $0.80 \leq a \leq 0.99$, $0.82 \leq a \leq 0.99$, $0.84 \leq a \leq 0.99$, or $0.86 \leq a \leq 0.99$.

The b represents a molar ratio of cobalt among all metals excluding lithium in the lithium nickel-based transition metal oxide, and may be $0 < b \leq 0.30$, $0.01 < b \leq 0.25$, $0.01 < b \leq 0.20$, or $0.01 < b \leq 0.15$.

The c represents a molar ratio of $M^1$ among all metals excluding lithium in the lithium nickel-based transition metal oxide, and may be $0 < c \leq 0.30$, $0.01 \leq c \leq 0.25$, $0.01 \leq c \leq 0.20$, or $0.01 \leq c \leq 0.15$.

The d represents a molar ratio of $M^2$ element among all metals excluding lithium in the lithium nickel-based transition metal oxide, and may be $0 \leq d \leq 0.05$, $0 \leq d \leq 0.02$ or $0 \leq d \leq 0.01$.

The e represents a molar ratio of element X among all non-metals excluding oxygen in the lithium nickel-based transition metal oxide, and may be $0 \leq e \leq 0.05$, $0 \leq e \leq 0.02$ or $0 \leq e \leq 0.01$.

Here, the lithium metal ratio (Li/Me, 1+x in the compositional formula), which is a ratio of the number of moles of lithium to the total number of moles of the transition metals, is preferably less than 1.1, or 1.07 or less, and more preferably 1.05 or less, or 1.03 or less, in view of the possibility of defects in the crystal structure, such as cation mixing, or the possibility of lithium dendrite structure on the negative electrode. In this case, the storage characteristics and lifespan characteristics under high temperature can be excellent; the capacity characteristics can be excellent by reducing the amount of lithium by-products generated; and the amount of gas generated, which causes lifespan deterioration, can be reduced.

Meanwhile, the lithium nickel-based transition metal may further include, on the surface of the particle, a coating layer containing one or more coating elements selected from the group consisting of Al, Ti, W, B, F, P, Mg, Ni, Co, Fe, Cr, V, Cu, Ca, Zn, Zr, Nb, Mo, Sr, Sb, Bi, Si and S.

When the coating layer is present on the surface of the lithium nickel-based transition metal oxide particle, the contact between the electrolyte and the lithium nickel-based transition metal oxide can be suppressed by the coating layer, thereby having the effect of reducing transition metal elution or gas generation due to side reactions with the electrolyte.

Preferably, the coating layer may include Co as a coating element. When the coating layer containing Co is formed on the surface of the lithium nickel-based transition metal oxide particle in the form of a single particle and/or a quasi-single particle, an effect of improving output can be obtained along with an effect of suppressing side reactions with the electrolyte.

Meanwhile, the positive electrode active material powder according to the present invention has a BET specific surface area of 0.1 m²/g to 1.0 m²/g, preferably 0.3 m²/g to 1.0 m²/g, more preferably 0.5 m²/g to 1.0 m²/g. When the BET specific surface area of the positive electrode active material powder satisfies the above range, side reactions with the electrolyte can be appropriately controlled, and the mobility (kinetics) of lithium ions at the interface between the positive electrode active material and the electrolyte can be secured at a certain level or higher.

## Method of Manufacturing Positive Electrode Active Material

Next, a method of manufacturing the positive electrode active material powder of the present invention will be described.

The method of manufacturing the positive electrode active material powder according to the present invention includes the steps of: (S1) preparing a positive electrode active material precursor by adding a transition metal-containing solution containing cations of nickel (Ni), cobalt (Co) and $M^1$, a basic aqueous solution, and an ammonium solution and performing a coprecipitation reaction; and (S2) preparing a positive electrode active material powder by mixing the positive electrode active material precursor and a lithium raw material and heat-treating them.

In addition, the prepared positive electrode active material includes a lithium nickel-based transition metal oxide in the form of a single particle formed of one nodule or a quasi-single particle that is a composite of 30 or less nodules. The positive electrode active material according to the present invention can be obtained by preparing a large-diameter lithium nickel-based transition metal oxide and a small-diameter lithium nickel-based transition metal oxide separately and then mixing them.

Hereinafter, each step of the method of manufacturing the positive electrode active material powder will be described in detail.

First, the transition metal-containing solution containing cations of nickel (Ni), cobalt (Co), and M$^1$ is prepared. For example, the transition metal-containing solution may include a nickel-containing raw material, a cobalt-containing raw material, and an M$^1$-containing raw material, wherein the M$^1$-containing raw material may be a manganese-containing raw material and/or an aluminum-containing raw material.

Thereafter, the positive electrode active material precursor can be prepared by adding an ammonium cation-containing complex forming agent and a basic aqueous solution to the transition metal solution and performing a coprecipitation reaction.

The nickel-containing raw material may be, for example, a nickel-containing acetate, nitrate, sulfate, halide, sulfide, hydroxide, oxide, oxyhydroxide, or the like, and specifically, $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, fatty acid nickel salt, nickel halide, or a combination thereof, but is not limited thereto.

The cobalt-containing raw material may be a cobalt-containing acetate, nitrate, sulfate, halide, sulfide, hydroxide, oxide, oxyhydroxide, or the like, and specifically, $Co(OH)_2$, $CoOOH$, $Co(OCOCH_3)_2 \cdot 4H_2O$, $Co(NO_3)_2 \cdot 6H_2O$, $CoSO_4$, $Co(SO_4)_2 \cdot 7H_2O$, or a combination thereof, but is not limited thereto.

The manganese-containing raw material may be, for example, a manganese-containing acetate, nitrate, sulfate, halide, sulfide, hydroxide, oxide, oxyhydroxide, or a combination thereof, and specifically, a manganese oxide such as $Mn_2O_3$, $MnO_2$, $Mn_3O_4$, etc.; a manganese salt such as $MnCO_3$, $Mn(NO_3)_2$, $MnSO_4$, manganese acetate, dicarboxylic acid manganese salt, manganese citrate, fatty acid manganese salt; a manganese oxyhydroxide, manganese chloride, or a combination thereof, but is not limited thereto.

The aluminum-containing raw material may be, for example, $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$, aluminum halides, or a combination thereof.

The transition metal-containing solution can be prepared by adding the nickel-containing raw material, cobalt-containing raw material, and M$^1$-containing raw material to a solvent, specifically water, or a mixed solvent of organic solvents (e.g. alcohol, etc.) that can be mixed uniformly with water, or by mixing an aqueous solution of the nickel-containing raw material, an aqueous solution of the cobalt-containing raw material, and the M$^1$-containing raw material.

The ammonium cation-containing complex forming agent may be, for example, $NH_4OH$, $(NH_4)_2SO_4$, $NH_4NO_3$, $NH_4Cl$, $CH_3COONH_4$, $NH_4CO_3$, or a combination thereof, but is not limited thereto. Meanwhile, the ammonium cation-containing complex former may be used in the form of an aqueous solution, wherein the solvent may be water, or a mixture of water and an organic solvent (specifically, alcohol, etc.) that is uniformly miscible with water.

The basic compound may be a hydroxide of an alkali metal or alkaline earth metal, such as $NaOH$, $KOH$, or $Ca(OH)_2$, a hydrate thereof, or a combination thereof. The basic compound may also be used in the form of an aqueous solution, wherein the solvent may be water, or a mixture of water and an organic solvent (specifically, alcohol, etc.) that is uniformly miscible with water.

The basic compound is added to adjust the pH of the reaction solution, and may be added in an amount such that the pH of the metal solution is 8 to 12.

The coprecipitation reaction may be performed at a temperature ranging from 35°C to 80°C under an inert atmosphere such as nitrogen or argon.

Accordingly, the positive electrode active material precursor containing cations of nickel, cobalt, and M$^1$ can be prepared.

Through the above process, positive electrode active material precursor particles of nickel-cobalt-M$^1$ hydroxide are produced and precipitated in the reaction solution. By controlling the concentrations of the nickel-containing raw material, cobalt-containing raw material and M$^1$-containing raw material, the positive electrode active material precursor can be prepared in which the nickel (Ni) content of the total metal content is 60 mol% or more, 65 mol% or more, 70 mol% or more, 75 mol% or more, and preferably 80 mol% or more. The precipitated positive electrode active material precursor particles can be separated and dried according to a conventional method to produce the positive electrode active material precursor.

Meanwhile, the positive electrode active material precursor prepared as above may have a tap density of 2.2 g/cc or less, preferably 1.2 to 2.1 g/cc, and more preferably 1.4 to 2.0 g/cc. When using the positive electrode active material precursor having a tap density satisfying the above range, the lithium nickel-based transition metal oxide in the form of a single particle and/or a quasi-single particle can be easily formed, and the size of the nodule can be appropriately adjusted to form the positive electrode active material powder satisfying Equations 1 and 2 above. The formation of the single particle and quasi-single particle and the formation of the large particle vary depending on the process conditions such as temperature, reaction time, addition of additives, and adjustment of pH in the coprecipitation reaction described above. Therefore, if the tap density of the positive electrode active material precursor is outside the above range, the desired form of lithium nickel-based transition metal oxide may not be formed. When the tap density is outside the above range, the active material may be manufactured in the form of a secondary particle, or may remain as a single particle with a small particle diameter. Therefore, it is necessary to control the above conditions in consideration of the particle size and degree of single particle formation of the particles to be manufactured.

Thereafter, the positive electrode active material precursor and the lithium raw material are mixed, and heat treated.

The lithium raw material may be lithium-containing sulfate, nitrate, acetate, carbonate, oxalate, citrate, halide, hydroxide, or oxyhydroxide, but is not particularly limited as long as it is soluble in water. Specifically, the lithium raw material may be $Li_2CO_3$, $LiNO_3$, $LiNO_2$, $LiOH$, $LiOH \cdot H2O$, $LiH$, $LiF$, $LiCl$, $LiBr$, $LiI$, $CH_3COOLi$, $Li_2O$, $Li_2SO4$, $CH_3COOLi$, or $Li_3C_6H_5O_7$, and any one or a mixture of two or more thereof may be used.

The positive electrode active material precursor and the lithium raw material may be mixed at a molar ratio of 1: 1 to 1:1.05. The positive electrode active material precursor and the lithium raw material may be mixed, for example, at a molar ratio (Li/Me ratio, where Me is the total number of moles of transition metals) of about 1: 1, about 1:1.02, about 1:1.03, or about 1:1.05, but are not limited thereto.

The heat treatment may be performed at a temperature ranging from 750°C to 1000°C in the case of a high-Ni NCM-based lithium composite transition metal oxide with a nickel (Ni) content of 60 mol% or more. The heat treatment may be preferably performed, for example, at a temperature ranging from 800°C to 925°C, and more preferably at a temperature ranging from 850°C to 910°C. The formation of the positive electrode active material powder in the form of a single particle and/or quasi-single particle is influenced by the conditions of heat treatment temperature.

Accordingly, the manufactured positive electrode active material can have reduced particle breakage and strain in the crystal structure during the rolling process or charging and discharging of a lithium secondary battery including the same, and can have improved initial resistance characteristics.

The heat treatment may be performed under an air or oxygen atmosphere, for example, for 4 to 12 hours. Specifically, the heat treatment may be performed, for example, for 4 hours or more, 6 hours or more, 8 hours or more, 10 hours or more, and for 12 hours or less, 10 hours or less, 8 hours or less, and 6 hours or less.

In the firing process, the firing temperature and time, firing atmosphere, and Li/Me ratio may affect the formation of large particles or single particles in particle production, and by appropriately controlling these conditions, the single particles with a large particle diameter and the single particles with a small particle diameter can be manufactured.

Meanwhile, when the lithium nickel-based transition metal oxide containing $M^2$ metal is to be prepared, $M^2$ metal-containing raw materials may be additionally mixed during the coprecipitation reaction or in the firing step. In this case, the $M^2$ metal-containing raw material may be an acetate, carbonate, nitrate, sulfate, halide, sulfide, or oxide of the $M^2$ metal.

On the other hand, when it is desired to form a coating layer on the surface of the lithium nickel-based transition metal oxide, after the above heat treatment, a step of mixing the lithium nickel-based transition metal oxide prepared through the heat treatment and the coating raw material and then heat treating them may be further performed. In this case, the mixing may be accomplished by solid-phase mixing or liquid-phase mixing, and the heat treatment may be performed at an appropriate temperature depending on the coating raw material. For example, the heat treatment of the coating process may be performed at a temperature ranging from 400°C to 800°C, or 450°C to 750°C, but is not limited thereto.

Additionally, when manufacturing the positive electrode active material powder of the present invention, it is preferable not to perform a water washing process after the heat treatment. Conventionally, when manufacturing high-nickel (Ni) NCM-based lithium composite transition metal oxides, it was common to perform a water washing process after heat treatment to reduce the lithium by-product content. However, according to the present inventors' research, it has been found that when a water washing process is performed in the production of the lithium nickel-based transition metal oxide in the form of a single particle and/or a quasi-single particle, the surface properties of the lithium nickel-based transition metal oxide deteriorate during the water washing process, and thus the resistance is increased. Therefore, when manufacturing the positive electrode active material powder of the present invention, it is preferable not to perform water washing, but to consume the remaining lithium on the surface of the lithium nickel-based transition metal oxide through the coating layer formation process. In this way, when the positive electrode active material is manufactured without washing the lithium nickel-based transition metal oxide, an increase in resistance due to surface defects can be suppressed.

**Positive Electrode**

The positive electrode according to the present invention includes the positive electrode active material powder of the present invention described above. Specifically, the positive electrode includes a positive electrode current collector and a positive electrode active material layer formed on the positive electrode current collector, wherein the positive electrode active material layer includes the positive electrode active material powder according to the present invention. Since the positive electrode active material powder has been described above, a detailed description thereof will be omitted, and only the remaining components will be described in detail below.

The positive electrode current collector may include a highly conductive metal, and is not particularly limited as long as the positive electrode active material layer can be easily adhered thereto and is non-reactive within the voltage range of the battery. The positive electrode current collector may be, for example, stainless steel, aluminum, nickel, titanium, heat-treated carbon, or aluminum or stainless steel having a surface treated with carbon, nickel, titanium, silver, etc. Additionally, the positive electrode current collector may typically have a thickness of 3 to 500 $\mu$m, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

The positive electrode active material layer, along with the positive electrode active material powder, may optionally include a conductive material and a binder, if necessary.

In this case, the positive electrode active material powder may be included in an amount of 80% to 99% by weight, more specifically 85% to 98.5% by weight, based on the total weight of the positive electrode active material layer, and can exhibit excellent capacity characteristics when included in the above content range.

The conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive tube such as carbon nanotube; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may be included in an amount of 0.1 to 15% by weight based on the total weight of the positive electrode active material layer.

The binder serves to improve the bonding between the positive electrode active material particles and the adhesion between the positive electrode active material and the current collector. Specific examples thereof may include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber (SBR), fluorine rubber, polyacrylic acid, the polymers in which hydrogen is substituted with Li, Na, or Ca, or various copolymers thereof, and any one or a mixture of two or more thereof may be used. The binder may be included in an amount of 0.1% by weight to 15% by weight based on the total weight of the positive electrode active material layer.

The positive electrode may be manufactured according to a conventional positive electrode manufacturing method except for the use of the positive electrode active material powder described above. Specifically, the above positive electrode active material powder and, if necessary, a binder, a conductive material, and a dispersant are dissolved or dispersed in a solvent to prepare a positive electrode slurry composition. This slurry composition can be applied on a positive electrode current collector, and then dried and rolled to produce a positive electrode.

The solvent may be any solvent commonly used in the art, for example, dimethyl sulfoxide (DMSO), isopropyl alcohol, N-methylpyrrolidone (NMP), dimethylformamide (DMF), acetone, water, or the like, and any one or a mixture of two or more thereof may be used. The solvent may be used in an amount sufficient to dissolve or disperse the positive electrode active material, conductive material, binder and dispersant in consideration of the application thickness of the slurry and the manufacturing yield, and to allow the slurry to have a viscosity capable of exhibiting excellent thickness uniformity when applied for the subsequent positive electrode production.

Alternatively, the positive electrode may be manufactured by casting the positive electrode slurry composition on a separate support, peeling a film from the support, and then laminating the film on a positive electrode current collector.

## Electrochemical Device (Lithium Secondary Battery)

Next, an electrochemical device according to the present invention will be described. The electrochemical device according to the present invention includes the positive electrode of the present invention described above. Specifically, the electrochemical device may be a battery, a capacitor, etc., and more specifically, a lithium secondary battery.

Specifically, the lithium secondary battery includes a positive electrode, a negative electrode positioned opposite the positive electrode, and a separator and electrolyte interposed between the positive electrode and the negative electrode. Since the positive electrode is the same as described above, a detailed description thereof is omitted, and only the remaining components will be described in detail below.

In addition, the lithium secondary battery may optionally further include a battery container for accommodating an electrode assembly formed of the positive electrode, negative electrode, and separator, and a sealing member for sealing the battery container.

In the lithium secondary battery, the negative electrode includes a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, heat-treated carbon, copper or stainless steel that is surface-treated with carbon, nickel, titanium, silver, or the like, an aluminum-cadmium alloy, or the like. Additionally, the negative electrode current collector may typically have a thickness of

3 to 500 μm, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer optionally includes a binder and a conductive material along with the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as $SiO_\beta$ ($0<\beta<2$), $SnO_2$, vanadium oxide, and lithium vanadium oxide; or a composite including the metallic compound and the carbonaceous material, such as an Si-C composite or an Sn-C composite, and any one or a mixture of two or more thereof may be used. Also, a metal lithium thin film may be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature heat-treated carbon such as petroleum or coal tar pitch derived cokes.

The negative electrode active material may be included in an amount of 80% to 99% by weight based on the total weight of the negative electrode active material layer.

The binder is a component that assists in bonding between the conductive material, the active material, and the current collector, and is usually added in an amount of 0.1% to 10% by weight based on the total weight of the negative electrode active material layer. Examples of such binders include polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide and potassium titanate; conductive metal oxides such as titanium oxide; conductive materials such as polyphenylene derivatives.

The negative electrode active material and optionally a binder and a conductive material are dissolved or dispersed in a solvent to prepare a negative electrode slurry composition, which may be applied on a negative electrode current collector and dried to produce a negative electrode active material layer. Alternatively, the negative electrode active material layer may be manufactured by casting the negative electrode slurry composition on a separate support, peeling a film from the support, and then laminating the film on a negative electrode current collector.

Meanwhile, in the lithium secondary battery, the separator is to separate the negative electrode and the positive electrode, and to provide a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multi-layer structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto.

Specifically, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethylcarbonate (DEC), methylethylcarbonate (MEC), ethylmethylcarbonate (EMC), ethylene carbonate (EC), or propylene carbonate (PC) ; an alcohol-based solvent such as ethyl alcohol or isopropyl alcohol; nitriles such as R-CN (R is a straight, branched or cyclic C2-C20 hydrocarbon group, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable.

The lithium salt may be any compound without particular limitation as long as it can provide lithium ions used in a lithium secondary battery. Specifically, the anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, $LiB(C_2O_4)_2$, or the like. The lithium salt is preferably used at a concentration ranging from 0.1 to 2.0 M. When the concentration of the lithium salt is within the above range, the electrolyte has an appropriate conductivity and viscosity, whereby excellent electrolyte performance can be exhibited, and lithium ions can effectively move.

In order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

## Example

Hereinafter, examples of the present invention will be described in detail so that those skilled in the art can easily implement the present invention. However, the present invention may be embodied in a variety of forms and is not limited to the examples described herein.

### Example 1

As a lithium nickel-based transition metal oxide with a large particle diameter, a lithium nickel-based transition metal oxide was prepared in which the molar ratio of Ni:Co:Mn is 8:1:1, it is a powder of single particles and quasi-single particles, the volume average particle diameter ($D^L_{50}$) is 7.50 $\mu$m, the nodule average particle diameter ($D^L_{mean}$) is 6.58 $\mu$m, and Li/ Me is 1.0. As a lithium nickel-based transition metal oxide with a small particle diameter, a lithium nickel-based transition metal oxide was prepared in which the molar ratio of Ni:Co:Mn is 8:1:1, it is a powder of single particles and quasi-single particles, the volume average particle diameter ($D^S_{50}$) is 3.14 $\mu$m, the nodule average particle diameter ($D^S_{mean}$) is 2.98 $\mu$m, and Li/ Me is 1.0. The large-particle-diameter and small-particle-diameter lithium nickel-based transition metal oxides were mixed at a weight ratio of 7:3 to prepare a positive electrode active material.

### Examples 2 and 3

The large-particle-diameter and small-particle-diameter lithium nickel-based transition metal oxides having particle size characteristics as shown in Table 1 below were prepared and mixed in the same weight ratio as described therein to prepare positive electrode active materials of Examples 2 and 3.

### Comparative Example 1

A positive electrode active material was prepared in the same manner as in Example 1, except that 100% of the large-particle-diameter lithium nickel-based transition metal oxide was used without using the small-particle-diameter lithium nickel-based transition metal oxide.

### Comparative Example 2

A positive electrode active material was prepared in the same manner as in Example 1, except that 100% of the small-particle-diameter lithium nickel-based transition metal oxide was used without using the large-particle-diameter lithium nickel-based transition metal oxide.

**Comparative Example 3**

A positive electrode active material was prepared in the same manner as in Example 1, except that as the large-particle-diameter lithium nickel-based transition metal oxide, a powder in the form of a secondary particle in which hundreds of primary particles are agglomerated was used instead of the powder of single particles or quasi-single particles, and the volume cumulative average particle diameter ($D^L_{50}$) is 10.06 $\mu$m.

**Comparative Example 4**

A positive electrode active material was prepared in the same manner as in Example 1, except that as the large-particle-diameter lithium nickel-based transition metal oxide, one with a volume cumulative average particle diameter ($D^L_{50}$) of 6.2 $\mu$m and a nodule average particle diameter ($D^L_{mean}$) of 1.8 $\mu$m was used, and as the small-particle-diameter lithium nickel-based transition metal oxide, one with a volume average particle diameter ($D^S_{50}$) of 2.28 $\mu$m and a nodule average particle diameter ($D^S_{mean}$) of 1.0 $\mu$m was used.

**Comparative Example 5**

A positive electrode active material was prepared in the same manner as in Comparative Example 4, except that a small-particle-diameter lithium nickel-based transition metal oxide with a Li/Me ratio of 1.13 was applied.

**Comparative Example 6**

A positive electrode active material was prepared in the same manner as in Example 1, except that as the large-particle-diameter lithium nickel-based transition metal oxide, one with a volume cumulative average particle diameter ($D^L_{50}$) of 6.2 $\mu$m and a nodule average particle diameter ($D^L_{mean}$) of 5.15 $\mu$m was used, and as the small-particle-diameter lithium nickel-based transition metal oxide, one with a volume average particle diameter ($D^S_{50}$) of 4.5 $\mu$m and a nodule average particle diameter ($D^S_{mean}$) of 3.18 $\mu$m was used.

**Comparative Example 7**

A positive electrode active material was prepared in the same manner as in Example 3, except that 100% of the large-particle-diameter lithium nickel-based transition metal oxide was used without using the small-particle-diameter lithium nickel-based transition metal oxide.

**Experimental Example 1: Measurement of Particle Size Distribution of Positive Electrode Active Material and Average Particle Diameter of Nodule**

0.005 g of each positive electrode active material prepared in the above examples and comparative examples was dispersed in $H_2O$ as a dispersion medium, and then introduced into a commercially available laser diffraction particle size measuring device (Microtrac, MT 3000) and irradiated with an ultrasonic wave at about 28 kHz at an output of 60 W to obtain a volume cumulative particle size distribution graph of each positive electrode active material. This graph was used to measure $D^L_{50}$ and $D^S_{50}$, and the results are shown in Table 1 below.

The average particle diameters of the nodule, $D^L_{mean}$ and $D^S_{mean}$, were measured using an image obtained by photographing active material particles with a scanning electron microscope at a magnification of 5.0 K, and the average value of 30 particles containing one or more nodules was used.

[Table 1]

| | Large particle diameter | | | Small particle diameter | | | | Weight ratio |
|---|---|---|---|---|---|---|---|---|
| | $D^L_{50}$ | $D^L_{mean}$ | $D^L_{50} / D^L_{mean}$ | $D^S_{50}$ | $D^S_{mean}$ | $D^S_{50} / D^S_{mean}$ | Li/Me | |
| Example 1 | 7.50 | 6.58 | 1.14 | 3.14 | 2.98 | 1.054 | 1.0 | 7:3 |
| Example 2 | 7.50 | 6.58 | 1.14 | 3.14 | 2.98 | 1.054 | 1.0 | 6:4 |
| Example 3 | 9.30 | 7.14 | 1.30 | 3.60 | 2.45 | 1.470 | 1.0 | 7:3 |
| Comparative Example 1 | 7.50 | 6.58 | 1.14 | - | - | - | - | 10:0 |

(continued)

| | Large particle diameter | | | Small particle diameter | | | | Weight ratio |
|---|---|---|---|---|---|---|---|---|
| | $D^L_{50}$ | $D^L_{mean}$ | $D^L_{50} / D^L_{mean}$ | $D^S_{50}$ | $D^S_{mean}$ | $D^S_{50} / D^S_{mean}$ | Li/Me | |
| Comparative Example 2 | - | - | - | 3.14 | 2.98 | 1.054 | 1.0 | 0:10 |
| Comparative Example 3 | 10.0 6 | Not measurable | | 3.14 | 2.98 | 1.054 | 1.0 | 7:3 |
| Comparative Example 4 | 6.20 | 1.80 | 3.44 | 2.28 | 1.00 | 2.280 | 1.0 | 7:3 |
| Comparative Example 5 | 6.20 | 1.80 | 3.44 | 2.28 | 1.00 | 2.280 | 1.13 | 7:3 |
| Comparative Example 6 | 6.20 | 5.15 | 1.20 | 4.50 | 3.18 | 1.42 | 1.0 | 7:3 |
| Comparative Example 7 | 9.30 | 7.14 | 1.30 | - | - | - | - | 10:0 |

**Experimental Example 2: Tap Density, Rolling Density, and Amount of Fine Powder Generated of Positive Electrode Active Material**

The tap density of each positive electrode active material prepared in the examples and comparative examples was measured using a tap density tester (Micromeritics GeoPyc 1365). Specifically, a 45-cc container was charged with 10 g of each positive electrode active material prepared in the above examples and comparative examples, and then vibrated horizontally until a force of 108 N was applied to measure the tap density.

The rolling density of each positive electrode active material prepared in the examples and comparative examples was measured using a density meter (Caver Pellet Press). Specifically, 3 g of each positive electrode active material prepared in the above Examples and Comparative Examples was subdivided and filled tightly into a cylindrical holder with a diameter of 13 mm, and then a pressure of 9 tons was applied to measure the rolling density.

The generated amount of fine powder 1 $\mu$m or less was obtained from particle size analysis (PSD) data measured with the laser diffraction particle size measuring device described in Experimental Example 1 on the active material rolled to 9 tons using the density meter (Caver Pellet Press).

The measurement results of the tap density, rolling density, and amount of fine powder generated (% by volume) are shown in Table 2 below.

[Table 2]

| | Tap density (g/cm$^3$) | Rolling density (g/cm$^3$) | Amount of fine powder generated (volume%) |
|---|---|---|---|
| Example 1 | 2.48 | 3.66 | 1.45 |
| Example 2 | 2.45 | 3.64 | 1.35 |
| Example 3 | 2.52 | 3.68 | 1.26 |
| Comparative Example 1 | 2.39 | 3.59 | 2.87 |
| Comparative Example 2 | 2.26 | 3.50 | 3.56 |
| Comparative Example 3 | 2.40 | 3.60 | 6.25 |
| Comparative Example 4 | 2.30 | 3.56 | 3.68 |
| Comparative Example 5 | 2.30 | 3.56 | 3.89 |
| Comparative Example 6 | 2.20 | 3.48 | 3.96 |
| Comparative Example 7 | 2.20 | 3.52 | 1.49 |

Referring to Table 2 above, it can be confirmed that the tap densities and rolling densities of the examples satisfying all of the average particle diameters of the large and small particle diameters, the average particle diameter of the nodule, and their ratio values superior to those of the comparative examples that do not satisfy any of the above values, and the amount of fine powder generated was also excellent in the examples.

**Experimental Example 3: Evaluation of High Temperature Storage Characteristics (Amount of Gas Generated)**

Each positive electrode active material prepared in the examples and comparative examples, carbon black as a conductive material, and PVDFP as a binder were mixed in a weight ratio of 96:2:2 in N-methylpyrrolidone solvent to prepare a positive electrode slurry (5,000 mPa.s). This slurry was applied to one surface of an aluminum current collector, dried at 130°C, and rolled to manufacture a positive electrode.

An electrode assembly was manufactured by interposing a porous polyethylene separator between the positive electrode and negative electrode manufactured as above. This assembly was placed inside a case, into which an electrolyte was injected. The electrolyte was prepared by dissolving $LiPF_6$ at a concentration of 1 M in an organic solvent of ethylene carbonate/ethylmethyl carbonate/diethyl carbonate at a volume ratio of 3:4:4. For each lithium secondary battery half-cell manufactured as described above, charging (end current 1/20C) was performed in CCCV mode until 0.2C, 4.25V was reached. After charging, the cell was disassembled to obtain two charged positive electrodes and two polyethylene separators, which were stacked alternately on a bottom plate of a coin cell. Then, an electrolyte was injected to reassemble the coin cell. Afterwards, it was stored at 70°C for 4 weeks and the generated gas was measured using GC-MS, and the results were shown in Table 3 below.

**Experimental Example 4: Evaluation of High Temperature Lifespan Characteristics (Capacity Retention Rate)**

For the half-cell manufactured in Experimental Example 3, 50 cycles of charging and discharging were performed in which one cycle consists of charging up to 4.25V at a constant current of 0.5C at 45°C and discharging up to 2.5V at a constant current of 0.5C, and then the capacity retention rate was measured and shown in Table 3 below.

[Table 3]

|  | Amount of gas generated ($\mu$m) | Capacity retention rate at 45°C (%) |
|---|---|---|
| Example 1 | 57 | 90.22 |
| Example 2 | 60 | 90.08 |
| Example 3 | 52 | 90.19 |
| Comparative Example 1 | 81 | 83.26 |
| Comparative Example 2 | 105 | 87.51 |
| Comparative Example 3 | 176 | 87.06 |
| Comparative Example 4 | 96 | 86.12 |
| Comparative Example 5 | 126 | 85.19 |
| Comparative Example 6 | 106 | 86.59 |
| Comparative Example 7 | 62 | 86.95 |

Referring to Table 3 above, it can be seen that in the case of cells to which the positive electrode active materials according to Examples were applied, the amount of gas generated after storage for 4 weeks was significantly lower than that of cells to which the positive electrode active materials of Comparative Examples were applied. This shows that when the positive electrode active materials according to the present invention were applied, the high temperature storage characteristics of the battery were improved. In addition, it can be seen that under the condition of 50 cycles, the capacity retention rate of cells using the positive electrode active materials of Examples was 90% or more, whereas that of cells using the positive electrode active materials of Comparative Examples was lower than 87%. That is, it can be seen that when the positive electrode active materials according to the present invention are applied, high temperature lifespan characteristics can be improved.

Furthermore, referring to Comparative Examples 4 and 5, it can be seen that in the case of Comparative Example 5 in which a perlithium positive electrode active material was applied by adjusting the Li/Me ratio, other performances were measured similarly to those of Comparative Example 4 in which it was not applied, but the amount of gas generated was significant, which may cause a swelling phenomenon of the cell and thus problems in the safety or durability of the cell.

**Claims**

1.  A positive electrode active material, including:

a lithium nickel-based transition metal oxide with a large particle diameter and a lithium nickel-based transition metal oxide with a small particle diameter,

wherein the lithium nickel-based transition metal oxide is in the form of at least one of a single particle formed of one nodule and a quasi-single particle that is a composite of 30 or less nodules,

wherein the lithium nickel-based transition metal oxide with a large particle diameter has a $D^L_{50}$ of 6.5 $\mu$m to 12.0 $\mu$m, and

the lithium nickel-based transition metal oxide with a small particle diameter has a $D^S_{50}$ of 1.1 $\mu$m to 4.0 $\mu$m, and

wherein the lithium nickel-based transition metal oxide with a large particle diameter satisfies Equation 1 below:

[Equation 1]

$$1.0 \le D^L_{50} / D^L_{mean} \le 2.0$$

wherein the $D^L_{mean}$ is the average particle diameter value of the nodule measured from a scanning electron microscope image for the lithium nickel-based transition metal oxide with a large particle diameter, and the $D^L_{50}$ is the 50% volume cumulative distribution value of the lithium nickel-based transition metal oxide with a large particle diameter.

2. The positive electrode active material according to claim 1, wherein each of the lithium nickel-based transition metal oxide with a large particle diameter and the lithium nickel-based transition metal oxide with a small particle diameter is independently represented by the following chemical formula (1):

[Chemical Formula 1] $\quad\quad Li_{1+x}Ni_aCo_bM1_cM2_dO_2$

wherein M1 includes one or more selected from Mn and Al; M2 includes one or more selected from the group consisting of W, Zr, Y, Ba, Ca, Ti, Mg, Ta and Nb; and $0 \le x \le 0.1$, $0.6 \le a < 1$, $0 < b < 0.3$, $0 < c < 0.3$, and $0 \le d \le 0.05$.

3. The positive electrode active material according to claim 1, wherein each of the lithium nickel-based transition metal oxide with a large particle diameter and the lithium nickel-based transition metal oxide with a small particle diameter independently have a nickel content in the transition metal of 75 mol% or more.

4. The positive electrode active material according to claim 1, wherein each of the lithium nickel-based transition metal oxide with a large particle diameter and the lithium nickel-based transition metal oxide with a small particle diameter independently have a ratio of the number of moles of lithium to the total number of moles of the transition metal (Li/Me) of 1.05 or less.

5. The positive electrode active material according to claim 1, wherein the difference ($D^L_{50}$-$D^S_{50}$) between the lithium nickel-based transition metal oxide with a large particle diameter and the lithium nickel-based transition metal oxide with a small particle diameter is 2.0 $\mu$m to 5.8 $\mu$m.

6. The positive electrode active material according to claim 1, wherein the nodule of the large-particle-diameter lithium nickel-based transition metal oxide has an average particle diameter ($D^L_{mean}$) of 3.0 $\mu$m to 10.0 $\mu$m.

7. The positive electrode active material according to claim 1, wherein the average particle diameter ($D^S_{mean}$) of the nodules of the small-particle-diameter lithium nickel-based transition metal oxide is 1.0 $\mu$m to 3.0 $\mu$m, and satisfies Equation 2 below:

[Equation 2]

$$1.0 \le D^S_{50} / D^S_{mean} \le 2.0$$

wherein the $D^S_{mean}$ is the average particle diameter value of the nodule measured from a scanning electron microscope image for the lithium nickel-based transition metal oxide with a small particle diameter, and the $D^S_{50}$ is the 50% volume cumulative distribution value of the lithium nickel-based transition metal oxide with a small particle diameter.

8. The positive electrode active material according to claim 1, wherein fine particles with a particle diameter of 1 $\mu$m or less in the positive electrode active material are 2.0% by volume or less based on the total volume.

9. The positive electrode active material according to claim 1, wherein the positive electrode active material has a tap density of 2.40 g/cm$^3$ or more and a rolling density of 3.60 g/cm$^3$ or more.

10. The positive electrode active material according to claim 1, further including a coating layer disposed on the surface of the lithium nickel-based transition metal oxide and containing one or more coating elements selected from the group consisting of Al, Ti, W, B, F, P, Mg, Ni, Co, Fe, Cr, V, Cu, Ca, Zn, Zr, Nb. Mo, Sr, Sb, Bi, Si and S.

11. A positive electrode including the positive electrode active material according to claim 1.

12. A lithium secondary battery comprising the positive electrode of claim 11.

## INTERNATIONAL SEARCH REPORT

| International application No. |
|---|
| **PCT/KR2023/021398** |

| A. | CLASSIFICATION OF SUBJECT MATTER |
|---|---|

**H01M 4/525**(2010.01)i; **H01M 4/505**(2010.01)i; **H01M 4/36**(2006.01)i; **H01M 4/131**(2010.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); H01M 10/052(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극활물질 (cathode active material), 대입경 (large diameter particle), 소입경 (small diameter particle), 바이모달 (bimodal), 주사전자현미경 (scanning electron microscopy), 평균입경 (average diameter)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2020-0044448 A (LG CHEM, LTD.) 29 April 2020 (2020-04-29)<br>See abstract; and claims 1, 4, 5 and 10-11. | 1-12 |
| A | KR 10-2022-0030027 A (ECOPRO BM CO., LTD.) 10 March 2022 (2022-03-10)<br>See entire document. | 1-12 |
| A | JP 2018-041657 A (GS YUASA CORP.) 15 March 2018 (2018-03-15)<br>See entire document. | 1-12 |
| A | KR 10-2015-0006283 A (SAMSUNG SDI CO., LTD.) 16 January 2015 (2015-01-16)<br>See entire document. | 1-12 |
| A | KR 10-2022-0127517 A (SK ON CO., LTD.) 20 September 2022 (2022-09-20)<br>See entire document. | 1-12 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 April 2024** | **09 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2023/021398** |

| Patent document cited in search report | | | Publication date (day/month/year) | Patent family member(s) | | | Publication date (day/month/year) |
| --- | --- | --- | --- | --- | --- | --- | --- |
| KR | 10-2020-0044448 | A | 29 April 2020 | None | | | |
| KR | 10-2022-0030027 | A | 10 March 2022 | CN | 114203981 | A | 18 March 2022 |
| | | | | EP | 3965183 | A1 | 09 March 2022 |
| | | | | JP | 2022-042478 | A | 14 March 2022 |
| | | | | JP | 2023-118940 | A | 25 August 2023 |
| | | | | KR | 10-2022-0066232 | A | 24 May 2022 |
| | | | | KR | 10-2397756 | B1 | 13 May 2022 |
| | | | | KR | 10-2511736 | B1 | 20 March 2023 |
| | | | | US | 2022-0069289 | A1 | 03 March 2022 |
| JP | 2018-041657 | A | 15 March 2018 | JP | 6844156 | B2 | 17 March 2021 |
| KR | 10-2015-0006283 | A | 16 January 2015 | CN | 104282903 | A | 14 January 2015 |
| | | | | CN | 104282903 | B | 20 November 2018 |
| | | | | EP | 2824735 | A2 | 14 January 2015 |
| | | | | EP | 2824735 | A3 | 27 May 2015 |
| | | | | EP | 2824735 | B1 | 26 December 2018 |
| | | | | JP | 2015-018803 | A | 29 January 2015 |
| | | | | JP | 6508806 | B2 | 08 May 2019 |
| | | | | KR | 10-1785262 | B1 | 16 October 2017 |
| | | | | US | 2015-0010819 | A1 | 08 January 2015 |
| | | | | US | 9184443 | B2 | 10 November 2015 |
| KR | 10-2022-0127517 | A | 20 September 2022 | CN | 115072799 | A | 20 September 2022 |
| | | | | EP | 4057377 | A1 | 14 September 2022 |
| | | | | US | 2022-0293935 | A1 | 15 September 2022 |

Form PCT/ISA/210 (patent family annex) (July 2022)

**EP 4 621 881 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220183745